# EUROPÄISCHE PATENTSCHRIFT

(11) **EP 0 679 232 B1**
(45) Veröffentlichungstag und Bekanntmachung des Hinweises auf die Patenterteilung: **14.08.1996**
(21) Anmeldenummer: 94905029.8
(22) Anmeldetag: 11.01.1994
(51) Int. Cl.: F16D 65/08, F16D 51/00

(54) **NIEDERHALTEVORRICHTUNG FÜR EINE BREMSBACKE EINER TROMMELBREMSE**
HOLDING-DOWN DEVICE FOR A BRAKE SHOE OF A DRUM BRAKE
DISPOSITIF PERMETTANT DE MAINTENIR EN POSITION BASSE LA MACHOIRE D'UN FREIN A TAMBOUR

(30) Priorität: 14.01.1993 DE 9300423 U
(43) Veröffentlichungstag der Anmeldung: 02.11.1995
(73) Patentinhaber: LUCAS INDUSTRIES public limited company, Birmingham, B19 2XF West Midlands (GB)
(72) Erfinder: LÜDTKE, Peter, D-53424 Remagen (DE); BRIX, Hermann, D-56154 Boppard (DE)
(74) Vertreter: Goetz, Rupert, Dipl.-Ing.
(86) Internationale Anmeldenummer: EP9400059
(87) Internationale Veröffentlichungsnummer: WO9416240

(56) Entgegenhaltungen:
- EP-A- 0 006 405
- EP-A- 0 396 145
- WO-A-89/02993
- GB-A- 899 061
- GB-A- 1 220 992
- GB-A- 2 000 561
- GB-A- 2 122 291
- GB-A- 2 205 909

## Beschreibung

Die Erfindung betrifft eine Niederhaltevorrichtung für eine an einer Ankerplatte einer Trommelbremse geführte Bremsbacke mit
- einem Stift, der sich durch je ein Loch in der Ankerplatte und einem Steg der Bremsbacke hindurcherstreckt, einen an der Ankerplatte abgestützten Fuß sowie einen Kopf aufweist, und
- einer Federanordnung zwischen dem Kopf und dem Steg mit einem Aufnahmeteil, das einen vertieften Sitz für den Kopf sowie einen zum radialen Aufschieben des Aufnahmeteils auf den Stift vorgesehenen Schlitz aufweist, welcher durch ein Paar äußere Kanten und ein Paar sich daran anschließender innerer Kanten begrenzt ist.

Eine solche Niederhaltevorrichtung ist aus der GB-A 899 061 bekannt. Dabei ist der Kopf des Stiftes in der Art eines Hammerkopfes ausgebildet und die Federanordnung ist von einer C-förmigen Blattfeder mit zwei symmetrisch zueinander angeordneten Schenkeln gebildet, die durch einen Scheitelbereich miteinander verbunden sind und an ihren vom Scheitel entfernten freien Enden je einen aufgekanteten Rand aufweisen. Ausgehend von diesem Rand steigt jeder Schenkel in Richtung zum Scheitel bis zu einer wellenförmigen, zum Scheitel parallelen Erhebung hin an; darauf folgt eine ebenfalls zum Scheitel parallele zylindrische Vertiefung, die sich quer über die gesamte Breite des betreffenden Schenkels erstreckt. Jeder der beiden Schenkel hat einen Schlitz, der von seinem aufgekanteten Rand ausgeht, sich mit gleichbleibender Breite bis zur Vertiefung erstreckt und jenseits von dieser in einem Halbkreisbogen endet. Bei der Montage dieser bekannten Niederhaltevorrichtung bildet der geschlitzte Teil des vom Steg der zugehörigen Bremsbacke entfernten Schenkels ein Aufnahmeteil, das soweit unter den am Stift ausgebildeten Hammerkopf geschoben wird, bis dieser, in Bezug auf den Schlitz querliegend, in die zylindrische Vertiefung einrastet. Falls der Hammerkopf entweder von Anfang an von seiner in Bezug auf den Schlitz querliegenden Orientierung abweicht oder der Stift sich während der Montage auch nur geringfügig um seine Achse dreht, ist eine korrekte Montage nicht mehr gewährleistet; es kann geschehen, daß der Hammerkopf auf der Erhebung stehenbleibt und später, z. B. bei Erschütterungen, längs des Schenkels wieder nach außen abrutscht, oder daß er durch den Schlitz hindurch fällt. In beiden Fällen wird die C-förmige Blattfeder, und somit auch die gesamte Niederhaltevorrichtung, unwirksam. Um dies zu vermeiden, muß die Niederhaltevorrichtung mit großer Sorgfalt von Hand montiert und möglichst von einer unabhängigen Person geprüft werden, ehe die Trommelbremse zur weiteren Montage freigegeben werden kann.

Der Erfindung liegt die Aufgabe zugrunde, eine Niederhaltevorrichtung für eine an einer Ankerplatte einer Trommelbremse geführte Bremsbacke derart weiterzubilden, daß die Montage der Niederhaltevorrichtung erleichtert und die Gefahr einer Fehlmontage vermindert wird.

Diese Aufgabe ist erfindungsgemäß ausgehend von einer Niederhaltevorrichtung der eingangs beschriebenen Gattung dadurch gelöst, daß
- der Kopf eine in bezug auf den Stift rotationssymmetrische, radial nach außen ansteigende Unterseite aufweist,
- der Sitz die Form eines Trichters mit kreisförmigem oberen Rand hat und
- die äußeren Kanten des Schlitzes zum oberen Rand des Sitzes hin konvergieren.

Bei der Montage der erfindungsgemäßen Niederhaltevorrichtung braucht nur darauf geachtet zu werden, daß der Stift sich mindestens annähernd rechtwinklig zum Steg der zugehörigen Bremsbacke von dieser weg erstreckt und das Aufnahmeteil der Federanordnung in einer zum Stift radialen Richtung soweit unter den Kopf des Stifts geschoben wird, bis dieser von den äußeren Kanten des Schlitzes erfaßt wird und auf ihnen entlang bis zum oberen Rand des Trichters gelangt. Von dort aus gleitet der Kopf von selbst in den Sitz hinein, in dem er dann sicher aufgenommen wird, ohne daß es jemals erforderlich gewesen wäre, auf eine bestimmte Drehwinkelstellung des Stifts und seines Kopfes zu achten. Erreicht der Kopf des Stifts hingegen wegen eines Montagefehlers den oberen Rand des Trichters nicht, so gleitet er sofort auf den zum offenen Ende des Schlitzes hin divergierenden äußeren Kanten nach außen und fällt schließlich zwischen diesen hindurch, so daß die Fehlmontage auch ohne besondere Aufmerksamkeit erkennbar wird oder, bei Automatisierung, mit einem einfachen Sensor feststellbar ist.

Die Unterseite des Kopfes ist vorzugsweise konvex. Dies hat den Vorteil, daß der Stift bei Betätigung der Trommelbremse in beliebiger Richtung kippbar ist, ohne daß die Lage des Kopfes in Bezug auf den trichterförmigen Sitz sich nennenswert ändert.

Der Sitz hat zweckmäßigerweise einen mit seinem oberen Rand konzentrischen kreisbogenförmigen unteren Rand, an dem der Schlitz endet. Dies bedeutet, daß der Schlitz sich nur soweit, wie unbedingt nötig, in das Aufnahmeteil hineinerstreckt und dieses somit nicht wesentlich schwächt.

Besonders vorteilhaft ist es, wenn jede der äußeren Kanten sich mit der zugehörigen inneren Kante in einem auf dem kreisförmigen oberen Rand des Sitzes liegenden Punkt schneidet. Dadurch wird das Risiko einer Fehlmontage weiter vermindert, da der Kopf selbst unter ungünstigsten Bedingungen kaum je eine Möglichkeit hat, in einer Art labilem Gleichgewichtszustand zwischen den äußeren und den inneren Kanten hängenzubleiben.

Es ist ferner vorteilhaft, wenn das Aufnahmeteil rings um den oberen Teil des Sitzes eben ist.

Die erfindungsgemäße Niederhaltevorrichtung kann mit der aus der GB-A 899 061 bekannten Niederhaltevorrichtung zusätzlich zu den eingangs beschriebenen Merkmalen die weitere Gemeinsamkeit haben, daß das Aufnahmeteil am oberen Schenkel einer C-förmig gebogenen Blattfeder ausgebildet ist. In diesem Fall ist es zweckmäßig, wenn der Schlitz von einem nach unten - also im Gegensatz zu der bekannten Anordnung nicht nach oben - abgebogenen äußeren Rand dieses Schenkels ausgeht. Dadurch wird die Montage der C-förmig gebogenen Blattfeder weiter erleichtert.

Bei einer alternativen Ausführungsform der Erfindung ist das Aufnahmeteil eine im wesentlichen rotationssymmetrische Scheibe, die auf einer Schraubenfeder sitzt, mit der zusammen sie die Federanordnung bildet.

Zwei Ausführungsbeispiele der Erfindung werden im folgenden anhand schematischer Zeichnungen mit weiteren Einzelheiten erläutert. Es zeigen:
- Fig. 1: eine axiale Ansicht einer Trommelbremse mit zwei erfindungsgemäßen Niederhaltevorrichtungen,
- Fig. 2: einen vergrößerten Ausschnitt aus Fig. 1 mit einer der Niederhaltevorrichtungen,
- Fig. 3: den Schnitt III-III in Fig. 2,
- Fig. 4: einen Ausschnitt entsprechend Fig. 2, jedoch in einem Anfangsstadium der Montage der Niederhaltevorrichtung,
- Fig. 5: den Schnitt V-V in Fig. 4,
- Fig. 6: einen Ausschnitt entsprechend Fig. 2 und 4, jedoch in einem fortgeschrittenen Stadium der Montage der Niederhaltevorrichtung,
- Fig. 7: den Schnitt VII-VII in Fig. 8,
- Fig. 8: einen Schnitt entsprechend Fig. 3 bei starker Belastung der Niederhaltevorrichtung,
- Fig. 9: eine der Fig. 2 entsprechende Ansicht einer anderen Ausführungsform einer erfindungsgemäßen Niederhaltevorrichtung,
- Fig. 10: den Schnitt X-X in Fig. 9,
- Fig. 11: ein Einzelteil aus Fig. 9, stark vergrößert, und
- Fig. 12: den Schnitt XII-XII in Fig. 11.

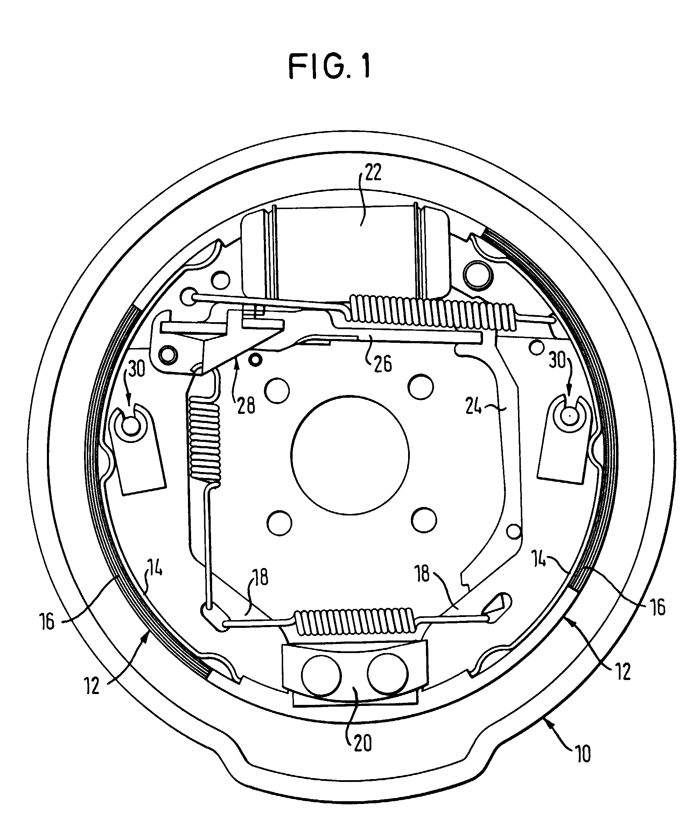

Die in Fig. 1 dargestellte Trommelbremse hat eine Ankerplatte 10, die zur Befestigung an der Hinterachse eines Kraftfahrzeugs vorgesehen ist, sowie zwei Bremsbacken 12, die an der Ankerplatte 10 derart verschiebbar geführt sind, daß sie sich an eine nicht dargestellte Bremstrommel anlegen lassen. Jeder der Bremsbacken 12 hat eine kreisbogenförmig gebogene Belagträgerplatte 14, an der ein Reibbelag 16 befestigt ist, sowie einen an der Belagträgerplatte 14 befestigten Steg 18, der parallel zur Ankerplatte 10 angeordnet ist. Zwischen den beiden Bremsbacken 12 ist an der Ankerplatte 10 ein Widerlager 20 befestigt; diesem diametral gegenüber ist ein hydraulischer Radbremszylinder 22 angeordnet. Für Feststellbremsungen ist an der in Fig. 1 rechten Bremsbacke 12 ein Handbremshebel 24 gelagert, der über eine Strebe 26 mit selbsttätiger Nachstellvorrichtung 28 gegen die andere Bremsbacke 12 drückt.

Jede der beiden Bremsbacken 12 ist durch eine Niederhaltevorrichtung 30 normalerweise in Anlage an der Ankerplatte 10 gehalten. Zu jeder der beiden Niederhaltevorrichtungen 30 gehört ein Stift 32, der sich mit radialem Spiel durch ein Loch 34 in der Ankerplatte 10 sowie durch ein Loch 36 im Steg 18 der zugehörigen Bremsbacke 12 hindurcherstreckt. Jeder der Stifte 32 hat einen rotationssymmetrischen Fuß 38 mit einer sphärischen Oberseite, die an der Unterseite der Ankerplatte 10 anliegt, sowie einen zylindrischen Schaft 40 und einen ebenfalls rotationssymmetrischen Kopf 42 mit einer sphärischen Unterseite 44. Zu jeder Niederhaltevorrichtung 30 gehört ferner eine Federanordnung.

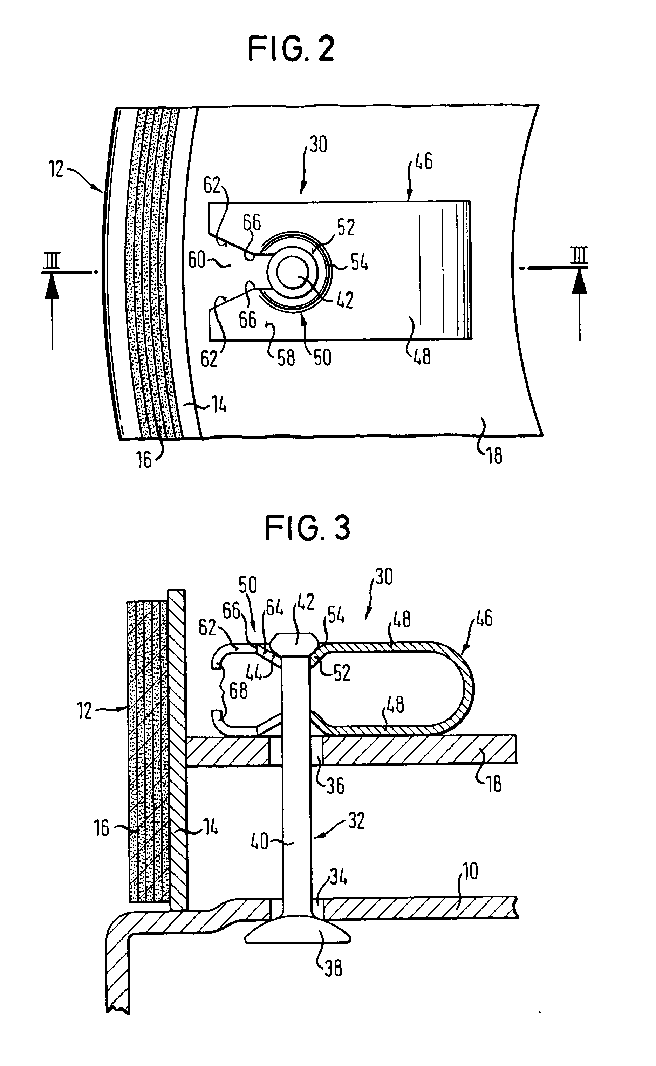

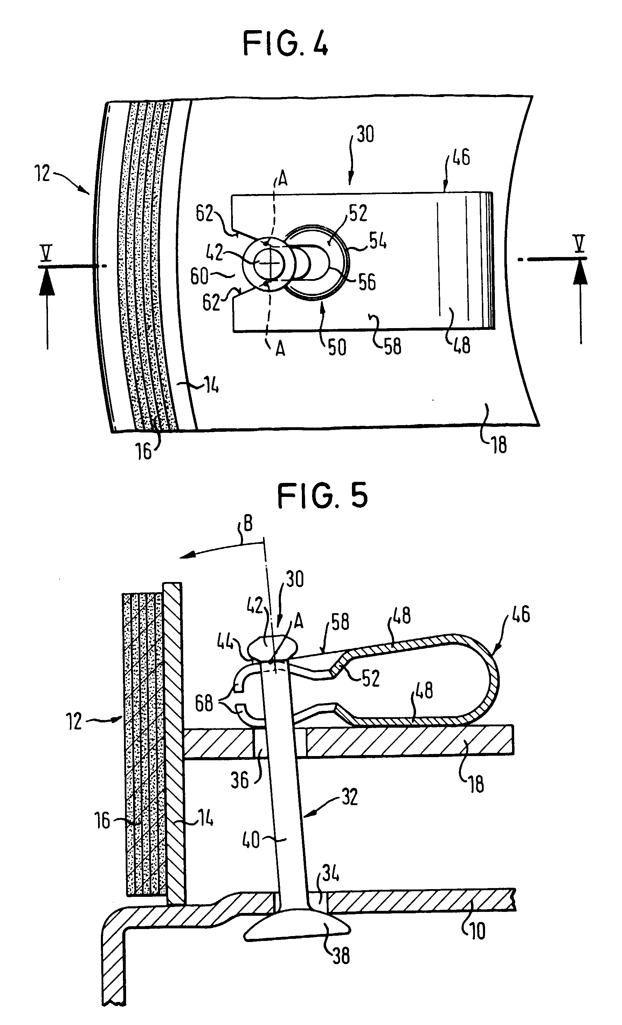

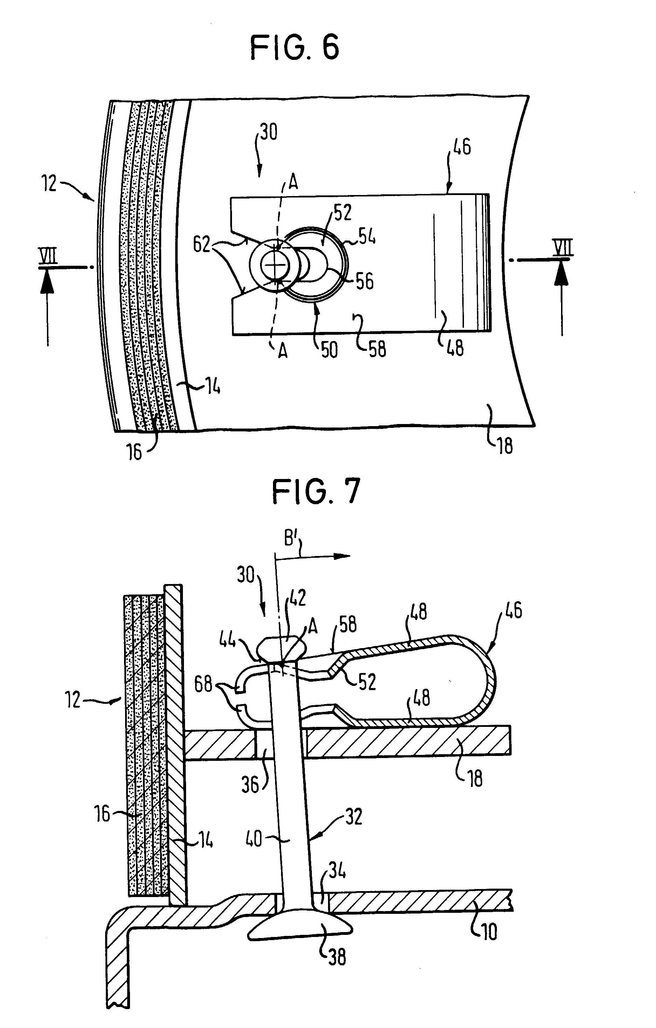

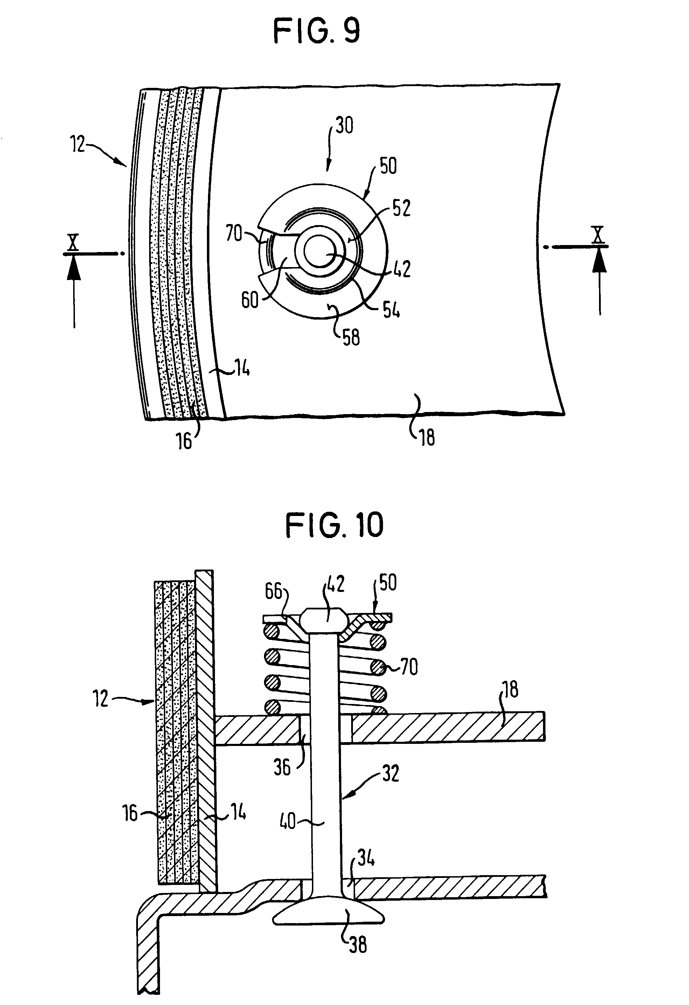

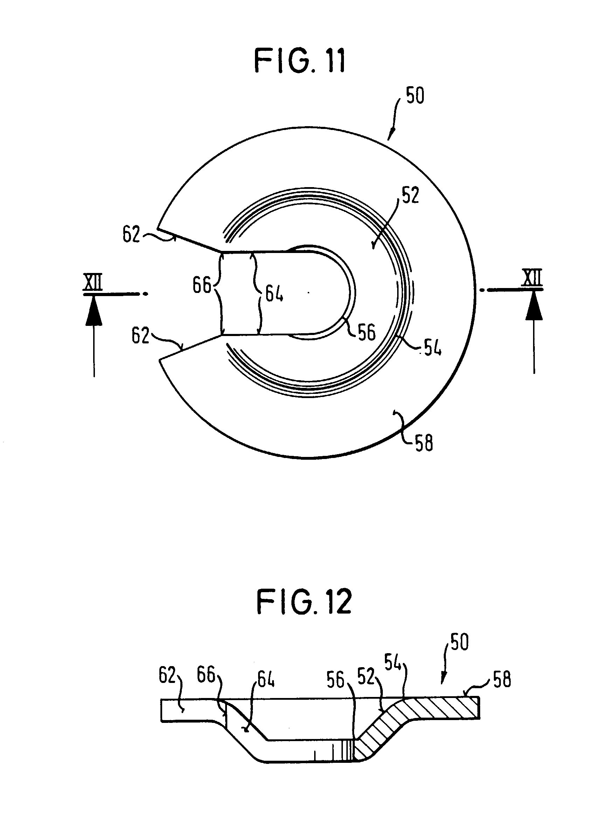

Das vorstehende gilt für die beiden in Fig. 1 bis 8 einerseits und in Fig. 9 bis 12 andererseits dargestellten Ausführungsbeispiele der Niederhaltevorrichtungen 30. Gemäß Fig. 1 bis 8 ist als Federanordnung eine C-förmige Blattfeder 46 mit zwei zueinander symmetrischen Schenkeln 48 vorgesehen. Je ein Endbereich der Schenkel 48 ist als Aufnahmeteil 50 ausgebildet; je nach Einbaulage wird nur das eine oder andere dieser Aufnahmeteile als solches verwendet, nämlich das in Fig. 3, 5, 7 und 8 obenliegende Aufnahmeteil 50. In folgenden ist deshalb nur noch von einem Aufnahmeteil 50 die Rede.

Das Aufnahmeteil 50 hat einen trichterförmigen Sitz 52 mit einem kreisförmigen oberen Rand 54 und einem dazu gleichachsig angeordneten halbkreisförmigen unteren Rand 56. Rings um den kreisförmigen oberen Rand 54 erstreckt sich eine ebene Fläche 58. Vom freien Ende des Schenkels 48 geht ein radialer Schlitz 60 aus, der in den trichterförmigen Sitz 52 mündet, jedoch nicht über ihn hinausgeht. Der Schlitz 60 ist in seinem äußeren Bereich durch ein Paar von außen nach innen konvergierender äußerer Kanten 62 begrenzt, die im wesentlichen in der Ebene der Fläche 58 liegen und am kreisförmigen oberen Rand 54 des Sitzes 52 enden. Der Schlitz 60 bildet ferner mit der trichterförmigen Wand des Sitzes 52 ein Paar innere Kanten 64, die sich in je einem Schnittpunkt 66 an je eine der äußeren Kanten 62 anschließen und zueinander parallel sind.

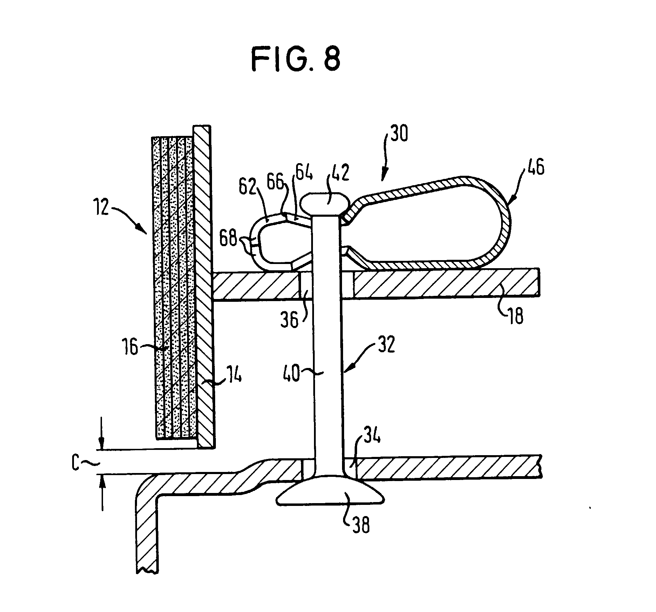

Der obere Schenkel 48 hat an seinem freien Ende einen nach unten abgebogenen Rand 68; in entsprechender Weise ist am unteren Schenkel 48 ein nach oben abgebogener Rand 68 ausgebildet, so daß die vollständige Symmetrie der beiden Schenkel gewahrt bleibt. Die beiden zueinander hin abgebogenen Ränder 68 in normalem Einbauzustand der Blattfeder 46 gemäß Fig. 3 einen Abstand von einander; die Blattfeder 46 läßt sich jedoch soweit zusammendrücken, bis die Ränder 68 gemäß Fig. 8 gegeneinander stoßen.

Um den in Fig. 2 und 3 abgebildeten Einbauzustand der Niederhaltevorrichtung 30 zu erreichen, wird die Blattfeder 46 mit ihrem Aufnahmeteil 50 unter den Kopf 42 des zugehörigen Stifts 32 geschoben, wobei der Schaft 40 in den Schlitz 60 eindringt und die Unterseite 44 des Kopfes 42 sich auf den beiden äußeren Kanten 62 in je einem Abstützpunkt A abstützt. Wird der Montagevorgang aus irgendeinem Grund unterbrochen, ehe die beiden Abstützpunkte A mit je einem der Schnittpunkte 66 zusammenfallen, so wirkt auf den Kopf 42 eine resultierende Kraft B, die den Stift 32 in Richtung zum offenen Ende des Schlitzes 60 drängt, so daß der Kopf schließlich durch den Schlitz hindurchfällt. Dabei wirkt der nach unten abgebogene Rand 68 ebensowenig als Hindernis wie beim ursprünglichen Einfädeln des Stiftes 32 in den Schlitz 60.

Sobald die beiden Abstützpunkte A je einen der Schnittpunkte 66 erreicht haben, wirkt auf den Kopf 42 eine Kraft B', die den Kopf 42 in seine tiefstmögliche Stellung im trichterförmigen Sitz 52 hineingleiten läßt.

Gemäß Fig. 8 bestimmen die beiden zueinander hin abgebogenen freien Ränder 68 der Blattfeder 46 das Maß C, um den die Bremsbacke 12 höchstens von der Ankerplatte 10 abgehoben werden kann.

Während gemäß Fig. 1 bis 8 das Aufnahmeteil 50 einstückig an der C-förmigen Blattfeder 46 ausgebildet ist, so daß diese für sich allein eine vollständige Federanordnung bildet, ist das Aufnahmeteil 50 gemäß Fig. 9 bis 12 ein gesondert hergestelltes, im wesentlichen rotationssymmetrisches Bauteil, das zusammen mit einer auf Druck belasteten Schraubenfeder 70 die Federanordnung bildet. Diese Federanordnung hat gegenüber der in Fig. 1 bis 8 dargestellten den Vorteil, daß sie in radialer Richtung, bezogen auf den Stift 32, allseits wenig Platz beansprucht. Die Montage ist allerdings etwas aufwendiger, da man erst den Stift 32 durch die Schraubenfeder 70 axial hindurchstecken und die Schraubenfeder zusammendrücken muß, ehe das gemäß Fig. 9 bis 12 schüsselförmige Aufnahmeteil 50 in radialer Richtung unter den Kopf 42 des Stifts 32 geschoben werden kann.

Die Strecke, um die sich die Bremsbacke 12 von der Ankerplatte 10 gegen den Widerstand der Schraubenfeder 70 wegdrängen läßt, ist durch die Summe der Abstände zwischen den einzelnen Windungen der Schraubenfeder bestimmt und läßt sich somit ebenso genau festlegen wie gemäß Fig. 8.

## Patentansprüche

1. Niederhaltevorrichtung für eine an einer Ankerplatte (10) einer Trommelbremse geführte Bremsbacke (12) mit
- einem Stift (32), der sich durch je ein Loch (34, 36) in der Ankerplatte (10) und einem Steg (18) der Bremsbacke (12) hindurcherstreckt, einen an der Ankerplatte (10) abgestützten Fuß (38) sowie einen Kopf (42) aufweist, und
- einer Federanordnung zwischen dem Kopf (42) und dem Steg (18) mit einem Aufnahmeteil (50), das einen vertieften Sitz (52) für den Kopf (42) sowie einen zum radialen Aufschieben des Aufnahmeteils (50) auf den Stift (32) vorgesehenen Schlitz (60) aufweist, welcher durch ein Paar äußere Kanten (62) und ein Paar sich daran anschließender innerer Kanten (64) begrenzt ist,
dadurch **gekennzeichnet**, daß
- der Kopf (42) eine in bezug auf den Stift (32) rotations-symmetrische, radial nach außen ansteigende Unterseite (44) aufweist,
- der Sitz (52) die Form eines Trichters mit kreisförmigem oberen Rand (54) hat und
- die äußeren Kanten (62) des Schlitzes (60) zum oberen Rand (54) des Sitzes (52) hin konvergieren.

2. Niederhaltevorrichtung nach Anspruch 1, dadurch **gekennzeichnet**, daß die Unterseite (44) des Kopfes (42) konvex ist.

3. Niederhaltevorrichtung nach Anspruch 1 oder 2, dadurch **gekennzeichnet**, daß der Sitz (52) einen mit seinem oberen Rand (54) konzentrischen kreisbogenförmigen unteren Rand (56) aufweist, an dem der Schlitz (60) endet.

4. Niederhaltevorrichtung nach einem der Ansprüche 1 bis 3, dadurch **gekennzeichnet**, daß jede der äußeren Kanten (62) sich mit der zugehörigen inneren Kante (64) in einem auf dem kreisförmigen oberen Rand (54) des Sitzes (52) liegenden Punkt (66) schneidet.

5. Niederhaltevorrichtung nach einem der Ansprüche 1 bis 4, dadurch **gekennzeichnet**, daß das Aufnahmeteil (50) rings um den oberen Rand (54) des Sitzes (52) eben ist.

6. Niederhaltevorrichtung nach einem der Ansprüche 1 bis 5, dadurch **gekennzeichnet**, daß
- das Aufnahmeteil (50) am oberen Schenkel (48) einer C-förmig gebogenen Blattfeder (46) ausgebildet ist und
- der Schlitz (60) von einem nach unten abgebogenen äußeren Rand (68) dieses Schenkels (48) ausgeht.

7. Niederhaltevorrichtung nach einem der Ansprüche 1 bis 5, dadurch **gekennzeichnet**, daß das Aufnahmeteil (50) eine im wesentlichen rotationssymmetrische Scheibe ist, die auf einer Schraubenfeder (70) sitzt, mit der zusammen sie die Federanordnung bildet.

## Claims

1. A hold-down device for a brake shoe (12) guided on an anchor plate (10) of a drum brake, comprising
- a pin (32) which passes through a hole (34, 36) each in the anchor plate (10) and in a web (18) of the brake shoe (12) and which includes a foot (38) resting on the anchor plate (10) and a head (42), further comprising
- a spring assembly disposed between the head (42) and the web (18) and including a receiving portion (50) which is formed with a recessed seat (52) for the head (42) and with a slot (60) which serves for radially slipping the receiving portion (50) on to the pin (32) and is defined by a pair of outer edges (62) and a pair of adjoining inner edges (64),
**characterized** in that
- the head (42) has a bottom (44) which is rotationally symmetric with respect to the pin (32) and rises radially outwardly,
- the seat (52) is of funnel shape having a circular upper edge (54), and
- the outer edges (62) of the slot (60) converge toward the upper edge (54) of the seat (52).

2. The hold-down device as claimed in claim 1, characterized in that the bottom (44) of the head (42) is convex.

3. The hold-down device as claimed in claim 1 or 2, characterized in that the seat (52) has a circular arc-shaped lower edge (56) which is concentric with the upper edge (54) thereof and at which the slot (60) ends.

4. The hold-down device as claimed in any one of claims 1 to 3, characterized in that each outer edge (62) intersects the corresponding inner edge (64) at a point (66) which is located on the circular upper edge (54) of the seat (52).

5. The hold-down device as claimed in any one of claims 1 to 4, characterized in that the receiving portion (50) is flat around the upper edge (54) of the seat (52).

6. The hold-down device as claimed in any one of claims 1 to 5, characterized in that
- the receiving portion (50) is formed in the upper limb (48) of a leaf spring (46) which is bent in C shape, and
- the slot (60) starts from a downwardly bent outer edge (68) of this limb (48).

7. The hold-down device as claimed in any one of claims 1 to 5, characterized in that the receiving portion (50) is a substantially rotationally symmetric disc seated on a helical spring (70) together with which it forms the spring assembly.

## Revendications

1. Dispositif de maintien en position basse d'une mâchoire de frein (12) guidée sur un plateau d'ancrage (10) d'un frein à tambour, comprenant
- une tige (32) traversant des ouvertures (34, 36) respectives du plateau d'ancrage (10) et d'une âme (18) de la mâchoire de frein (12) et qui présente une base (38) s'appuyant sur le plateau d'ancrage (10) ainsi qu'une tête (42), et
- un dispositif élastique situé entre la tête (42) et l'âme (18), comprenant une portion de réception (50) qui présente un siège creux (52) pour la tête (42) ainsi qu'une encoche (60) prévue pour l'enfilage radial de la portion de réception (50) sur la tige (32), laquelle est délimitée par une paire de bords extérieurs (62) et une paire de bords intérieurs (64) se raccordant aux premiers,
caractérisé en ce que
- la tête (42) présente une face inférieure (44) à symétrie de rotation et radialement ascendante vers l'extérieur par rapport à la tige (32),
- le siège (52) a une forme d'entonnoir à bord supérieur circulaire (54) et
- les bords extérieurs (62) de l'encoche (60) convergent vers le bord supérieur (54) du siège (52).

2. Dispositif de maintien en position basse selon la revendication 1,
caractérisé en ce que la face inférieure (44) de la tête (42) est convexe.

3. Dispositif de maintien en position basse selon la revendication 1 ou 2,
caractérisé en ce que le siège (52) présente un bord inférieur (56) en arc de cercle concentrique par rapport au bord supérieur (54), qui termine l'encoche (60).

4. Dispositif de maintien en position basse selon l'une quelconque des revendications 1 à 3,
caractérisé en ce que chaque bord extérieur (62) coupe le bord intérieur associé (64) en un point (66) situé sur le bord circulaire supérieur (54) du siège (52).

5. Dispositif de maintien en position basse selon l'une quelconque des revendications 1 à 4,
caractérisé en ce que la portion de réception (50) est plane tout autour du bord supérieur (54) du siège (52).

6. Dispositif de maintien en position basse selon l'une quelconque des revendications 1 à 5,
caractérisé en ce que
- la portion de réception (50) est formée dans la branche supérieure (48) d'un ressort à lame recourbé en forme de C (46) et
- l'encoche (60) part d'un bord extérieur courbé vers le bas (68) de cette branche (48).

7. Dispositif de maintien en position basse selon l'une quelconque des revendications 1 à 5,
caractérisé en ce que la portion de réception (50) est un disque sensiblement à symétrie de rotation qui s'appuie sur un ressort cylindrique (70) avec lequel elle forme le dispositif élastique.
